# EUROPEAN PATENT SPECIFICATION

(11) **EP 3 448 167 B1**
(45) Date of publication and mention of the grant of the patent: **27.09.2023**
(21) Application number: 16828801.7
(22) Date of filing: 24.11.2016
(51) Int. Cl.: B65B 23/06, B65B 25/00, B65B 35/12, B65B 35/56, B65B 47/06, A23G 1/50, B65D 85/60

(54) **A PACKAGING METHOD FOR FIGURED EGG-SHAPED CHOCOLATE FOOD PRODUCT**
VERPACKUNGSVERFAHREN FÜR EIN FIGÜRLICHES EIFÖRMIGES SCHOKOLADENNAHRUNGSMITTEL
PROCÉDÉ D'EMBALLAGE POUR PRODUIT ALIMENTAIRE EN CHOCOLAT FAÇONNÉ EN FORME D' UF

(30) Priority: 05.04.2016 TR 201604417
(43) Date of publication of application: 06.03.2019
(73) Proprietor: Solen Cikolata Gida Sanayi Ve Ticaret Anonim Sirketi, Istanbul (TR)
(72) Inventor: COBAN, Erdogan, Istanbul (TR)
(86) International application number: PCT/TR2016/050458
(87) International publication number: WO 2017/176223

(56) References cited:
- CH-A- 254 978
- GB-A- 952 925
- GB-A- 1 011 649
- GB-A- 2 511 560
- GB-A- 2 516 921
- US-A- 4 006 818
- US-A- 4 666 079
- US-A- 5 443 546
- US-A1- 2015 239 649
- Anonymous: "Family faces", Choclartiste , 3 March 2014 (2014-03-03), XP002768281, Retrieved from the Internet: URL:http://choclartiste.com.au/?p=373 [retrieved on 2017-03-17]
- Anonymous: "Easter Egg Monsters", Choc-o-holic - Chocolate Easter Eggs , 28 March 2015 (2015-03-28), XP002768282, Retrieved from the Internet: URL:http://www.chocolate-easter-eggs.co.uk /easter-egg-monsters/ [retrieved on 2017-03-17]

## Description

### TECHNICAL FIELD

The present invention relates to a packaging method for shell-structured egg-shaped chocolate food products.

### KNOWN STATE OF THE ART

Aluminum foils are used for packaging hollow chocolates in various forms, particularly in egg form. The chocolate is formed inside the aluminum foil or it is molded by means of placement inside a half-shell and a node is formed at the edges thereof.

The patent publication GB952925 relates to a method for producing foil-coated confectionery articles by casting, two metal foil shells are first made by pressing between die members, molten confectionery is introduced into one shell and both are placed together, and shaking or spinning distributes material round the inside of the shells. The adjacent margin of the two shells may be joined together after the confectionery has cooled. The metal foil is guided into a die set, cupping the foil and a cutter die co-operating with a support to trim it.

The European Patent Application EP2466631, the casing is illustrated having a sheath section formed with another sheath section along the connection line. The film material of the casing has a covering layer with thermoplastic coated metal foil. The sheath section has a gas-proof inner section for receiving the product.

US 2015/239649 A1 discloses a method of wrapping a product in a wrapper of sheet material, including the steps of: providing first and second sheets of wrapping material, shaping the first sheet to a shape substantially complementary to that of the product in conditions such that, once the first sheet is shaped, it covers the greater part of the product, inserting the product in the first shaped sheet, applying the second sheet to the portion of the product which is left uncovered by the first sheet so that the second sheet assumes a shape complementary to the respective portion of the product, joining the first and second sheets together to form a substantially closed wrapper around the product, and further shaping the first sheet around the product and over the second sheet so that the first sheet hides substantially all of the second sheet from the exterior. The shaping means comprises a die and a punch. The product to be wrapped might be hollow or filled chocolate eggs.

### BRIEF DESCRIPTION OF THE INVENTION

The object of the present invention is to provide easy alignment of the product by means of a package in case figurative items are added on the products provided in thin-walled chocolate egg structure.

In order to reach said object, the present invention is a packaging method for an egg-formed hollow chocolate food product which encircles a capsule wherein a product is kept. In the preferred application of the present invention, there are the process steps of providing a foil element on a die which is partially wider than the egg area; forming a main cavity and an auxiliary cavity placed into said main cavity which is in longitudinally half form of the egg by means of printing on the foil element by a corresponding core of the die; releasing the egg towards the main cavity and engaging a figurative element thereon to the corresponding auxiliary cavity; coupling thereof to the main cavity and closing the package. During packaging, as a result of changes in the weight center of the capsule wherein the product is kept, during falling of the hollow chocolate egg into the cavity provided on the foil element, the alignment of the main cavity is provided thanks to its compliant form, and the figurative element engaging to the auxiliary cavity prevents movement of the egg on the package. In a probable embodiment, the capsule is cylindrical and the product is movable in the capsule. Thus, when the product freely falls into the cavity provided in the foil element, since the product changes location inside the capsule as a result of the effect of falling, it may lead to swinging slightly towards the right and towards the left. The figurative element engaging to the auxiliary cavity prevents the removal of the egg from the place thereof as a result of vibration where the egg sits in a predetermined manner with weight and/or pre-speed inside the main cavity. A shape coupling is formed between the figurative element and the auxiliary cavity. This becomes possible by means of the mutual recesses and protrusions between the figurative element and the auxiliary cavity.

In a preferred application of the present invention, the process step of cutting the foil element with the outer periphery of the egg in a distanced manner so as to form a flange is provided. The flange forms a connection section for closing the rear section of the foil element. The auxiliary cavity is aligned with the main cavity within a figurative area border defined by the projection of the capsule. By means of this, the capsule guides the chocolate egg towards the auxiliary cavity with the gravity center.

The auxiliary cavity is formed with an area which is 5-50% of the surface area of the main cavity. Thus, the foil deformation is kept delimited, and the foil preserves its rigidity. In the preferred application, the process step of forming a main cavity to the rear foil element in order to close the package and joining the foil element and the rear foil element is provided. It is thus disclosed a foil element for a packaging method. The foil element comprises a thermoplastic layered aluminum foil. By means of this, the foil element and the rear foil element are joined by means of thermal joining method.

It is also disclosed, as not part of the present invention, an egg-shaped chocolate food product produced by means of the abovementioned packaging method. In the egg, the auxiliary cavity comprises circular protrusions. These protrusions provide the egg to be easily held to the foil element. The product, named as egg-shaped chocolate food product, is obtained by means of molding of the hollow thin-walled chocolate in egg form. At the same time, it encapsulates a capsule wherein for instance a toy is provided.

### BRIEF DESCRIPTION OF THE FIGURES

In Figure 1a, the top view of a piece cut from an aluminum foil in order to form half of the package for egg-formed hollow chocolate is given.
In Figure 1b, the top view where main cavity and auxiliary cavity are formed after first shaping of the aluminum foil illustrated in Figure 1a is given.
In Figure 1c, the cross sectional line view of the aluminum foil illustrated in Figure 1b is given. In Figure 1d, the top view of half of the package cut from the shaped aluminum foil is given.
In Figure 2, the lateral AA' lengthwise cross sectional view of the die providing first shaping illustrated in Figure 1b is given.
In Figure 3, the upper schematic view of the die illustrated in Figure 2 and of a robot arm which places a hollow chocolate egg to the die is given.
In Figure 4, the lateral BB' transverse cross sectional view of the die illustrating the centering movement of the egg placed onto a half-package as in Figure 1d is given.

### DETAILED DESCRIPTION OF THE INVENTION

The present invention is defined by the claims.

The present invention discloses a packaging method for an egg-formed (30) hollow chocolate food product which encircles a capsule (34) wherein a product (60) is kept, characterized by comprising the process steps of providing a foil element (10) on a die (40) which is wider than the egg (30) area; forming a main cavity (12) and an auxiliary cavity (14) placed into said main cavity (12) which is in longitudinal half form of the egg (30) by means of printing on the foil element (10) by a corresponding core (46) of the die (40); alignment to the auxiliary cavity (14) with the main cavity (12) within a figurative area border defined by the projection of the capsule (34) and releasing the egg (30) towards the main cavity (12) and engaging a figurative element (32) in the form of protrusion thereon to the corresponding auxiliary cavity (14); coupling thereof to the main cavity (12) and closing the package.

In this detailed description, the subject matter improvement is explained with references to examples without forming any restrictive effect only in order to make the subject more understandable.

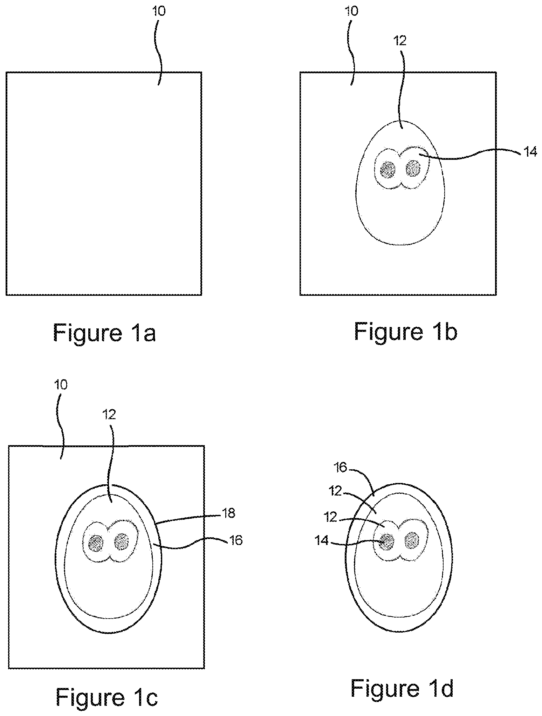

In Figure 1a, the top view of an aluminum foil element (10) whereon a thermoplastic layer is provided is given. The aluminum foil element (10), cut from a roll (not illustrated in the figures), is dimensioned in a manner having a surface area so as to be partially greater than the outer peripheral area of the food product which is in egg (30) form made of thin-walled hollow chocolate. In Figure 1b, the top view of a main cavity (12) formed on the foil element (10) and an auxiliary cavity (14) formed on the main cavity (12) is given. The main cavity (12) is a recess which is in cut egg form which is longitudinally cut in half. The auxiliary cavity (14) is in the form of two combined annular elements formed towards the intermediate and upper section of the main cavity (12) and it is in the form of one each circles in the middle. In Figure 1c, a cutting line (18) is illustrated which encircles the outer periphery of the main cavity (12) in a distanced manner. The periphery of the main cavity (12) is cut in a manner obtaining a flange (16) by means of a cutting die (not illustrated in the figures). With reference to patent GB952925, it can be seen how a main cavity is cut by forming by means of the die from the foil element (10). After cutting, the sheath is obtained from a hollow foil element (10) which is in half egg form. This sheath comprises the auxiliary cavity (14), the main cavity (12) and the flange (16) respectively.

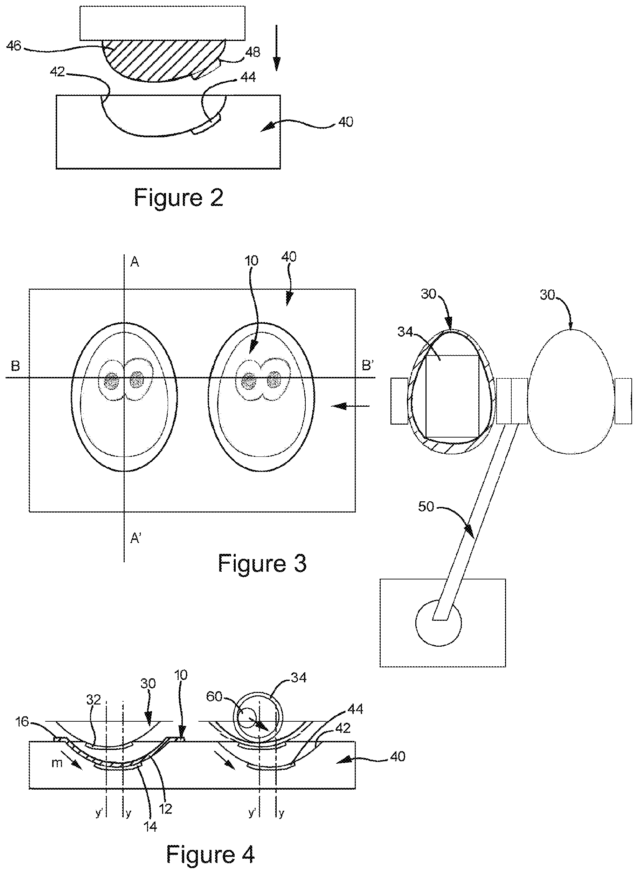

In Figure 2, the lateral cross sectional view of a die (40) shaping the foil element (10) is given. On the die (40), there is a main recess (42), and an auxiliary recess (44) provided on the main recess (42). A core (46), which is completely compliant to the main recess (42) and the auxiliary recess (44), is positioned on the die (40). The core (46) enters/exits the die (40), and it shapes the foil element (10) placed on the die (40).

In Figure 3, the foil element (10) shaped on the die (40) having two main cavities (12) is illustrated. Each foil element (10) has a main cavity (12) as the core (46) pushes towards and tightens the main recess (42). During forming of the foil element (10), a protrusion (48), provided on the core (46), pushes the main cavity (12) towards a recess (44) corresponding on the die (40), and it provides formation of the auxiliary cavity (14) on the foil element (10). A robot arm (50) carries the egg (30) at the end section thereof. The egg (30), where a capsule (34) is placed which carries a product (60) having figurative element (32) produced from another production line (not illustrated in the figures), is aligned to the upper section of the die (40) by means of the robot arm (50), and the egg (30) is released when it is above the corresponding main cavity (12). Meanwhile, when the egg (30) hits the main cavity (12) as a result of the effect of free fall, the product (60), which is provided in a free manner inside the capsule (34), is shaken and this may lead to slight rotation of the egg (30). This is shown in Figure 4 in a representative manner. In case the egg (30) is misaligned on the die (40) or in case of axial run-out of the figurative element (32) with respect to the auxiliary cavity (14) on the main cavity (12) of the foil element (10) sitting to the main recess (42) provided on the die (40) as a result of free fall, the egg (30) slides in a sliding direction (m) on the main cavity (12), and thereby the auxiliary cavity (14) is coupled to the figurative element (32). Axial run-out is the case where a distance exists between an egg vertical axis (y') which passes through the middle of the figurative element (32) and a die vertical axis (y) which passes through the auxiliary cavity (14).

In alternative embodiments, it is obvious that the egg (30) can be fallen onto the die (40) while the egg (30) is carried by means of the conveyor through another production line instead of the robot arm (50). Moreover, it is also possible that an operator manually aligns the eggs (30) inside the die.

### REFERENCE NUMBERS

| | |
|---|---|
| 10 Foil element | 44 Auxiliary recess |
| 12 Main cavity | 46 Core |
| 14 Auxiliary cavity | 48 Protrusion |
| 16 Flange | 50 Robot arm |
| 18 Cutting line | 60 Product |
| 30 Egg | |
| 32 Figurative element | |
| 34 Capsule | y Die vertical axis |
| 40 Die | y' Egg vertical axis |
| 42 Main recess | m Sliding direction |

## Claims

1. A packaging method for an egg-formed (30) hollow chocolate food product which encircles a capsule (34) wherein a product (60) is kept, **characterized by** comprising the process steps of providing a foil element (10) on a die (40) which is wider than the egg (30) area; forming a main cavity (12) and an auxiliary cavity (14) placed into said main cavity (12) which is in longitudinal half form of the egg (30) by means of printing on the foil element (10) by a corresponding core (46) of the die (40); alignment to the auxiliary cavity (14) with the main cavity (12) within a figurative area border defined by the projection of the capsule (34) and releasing the egg (30) towards the main cavity (12) and engaging a figurative element (32) in the form of protrusion thereon to the corresponding auxiliary cavity (14); coupling thereof to the main cavity (12) and closing the package.

2. A packaging method according to claim 1, wherein the process step of cutting the foil element (10) with the outer periphery of the egg (30) in a distanced manner so as to form a flange (16) is provided.

3. A packaging method according to any of the preceding claims, wherein the auxiliary cavity (14) is formed with an area which is 5-50% of the surface area of the main cavity (12).

## Patentansprüche

1. Ein Verpackungsverfahren für ein hohles, eiförmiges (30) Schokoladenprodukt, welches eine Kapsel (34) umschließt, in welcher ein Produkt (60) aufbewahrt wird, **gekennzeichnet durch** die Verfahrensschritte des Bereitstellens eines Folien-Elements (10) auf einem Stempel (40), der breiter ist als der Bereich des Eis (30); Bildung einer Hauptvertiefung (12) und einer Hilfsvertiefung (14), die in besagter Hauptvertiefung (12) angeordnet ist und die in der längshalben Form des Eis (30) durch Prägen auf dem Folien-Element (10) mittels eines entsprechenden Kerns (46) des Stempels (40) erstellt wird; Ausrichtung der Hilfsvertiefung (14) mit der Hauptvertiefung (12) innerhalb eines figurativen Bereichsrands, der durch die Projektion der Kapsel (34) definiert wird, und Freigabe des Eis (30) in Richtung der Hauptvertiefung (12) und Einsetzen eines figurativen Elements (32) in Form eines Vorsprungs darauf in die entsprechende Hilfsvertiefung (14); Verbindung damit zur Hauptvertiefung (12) und Verschluss der Verpackung.

2. Ein Verpackungsverfahren gemäß Anspruch 1, wobei der Verfahrensschritt des Schneidens des Folien-Elements (10) mit dem äußeren Umfang des Eis (30) in einem beabstandeten Verfahren vorgesehen ist, um einen Flansch (16) zu bilden.

3. Ein Verpackungsverfahren gemäß einem der vorhergehenden Ansprüche, bei dem die Hilfsvertiefung (14) mit einer Fläche gebildet wird, die 5-50% der Flächenoberfläche der Hauptvertiefung (12) entspricht.

## Revendications

1. Un procédé d'emballage pour un produit alimentaire en chocolat creux en forme d'oeuf (30) qui entoure une capsule (34) dans laquelle est conservé un produit (60), **caractérisé en ce qu'**il comprend les étapes de mise à disposition d'un élément en feuille (10) sur une matrice (40) qui est plus large que la zone de l'œuf (30); formant une cavité principale (12) et une cavité auxiliaire (14) placée dans ladite cavité principale (12) qui est sous forme de moitié longitudinale de l'œuf (30) par impression sur l'élément en feuille (10) par un noyau correspondant (46) de la matrice (40); alignement de la cavité auxiliaire (14) avec la cavité principale (12) dans une limite de zone figurative définie par la projection de la capsule (34) et libération de l'œuf (30) vers la cavité principale (12) et mise en place d'un élément figuratif (32) sous forme de saillie sur celle-ci à la cavité auxiliaire (14) correspondante; leur couplage à la cavité principale (12) et fermeture du paquet.

2. Un procédé d'emballage selon la revendication 1, où l'étape de découpe de l'élément en feuille (10) avec la périphérie extérieure de l'œuf (30) de manière éloignée de façon à former un rebord (16) est prévue.

3. Un procédé d'emballage selon l'une quelconque des revendications précédentes, dans lequel la cavité auxiliaire (14) est formée avec une superficie qui est de 5 à 50 % de la superficie de la cavité principale (12).
